# DEMANDE DE BREVET EUROPEEN

(11) **EP 4 803 865 A1**
(43) Date de publication de la demande: **09.09.2026**
(21) Numéro de dépôt: 26161418.4
(22) Date de dépôt: 27.02.2026
(51) Int. Cl.: G01G 21/26, G01G 23/01

(54) **DISPOSITIF DE MAINTIEN DE CHARGES**

(30) Priorité: 05.03.2025 CH 217202025
(71) Demandeur: Metrolegal SA, 1726 Farvagny (CH)
(72) Inventeur: Neuhaus, Patrick, Farvagny (CH)
(74) Mandataire: P&TS SA (AG, Ltd.)

(57) **Abrégé**

La présente invention porte sur un ensemble de calibrage comprenant un véhicule (1) pourvu d'une plateforme de chargement (10), un jeu de poids de calibrages (3) et un dispositif de maintien (4) de ces poids. L'invention porte en outre sur un tel dispositif de maintien, et sur une méthode d'arrimage de tels poids au moyen du dispositif de maintien.

## Description

### Domaine technique

La présente invention concerne un dispositif de maintien de charge sur un véhicule de transport, en particulier un camion. Le dispositif de maintien de charge est adapté pour libérer la charge rapidement et pour sécuriser la charge sur le véhicule de façon sûre et rapide. En l'occurrence, le dispositif de maintien de charge permet de s'affranchir des systèmes usuels de sangles. Les temps de chargement et de déchargement sont ainsi réduits.

### Etat de la technique

Les balances de pesée pour véhicules, permettant de déterminer le poids des véhicules et par conséquent leur niveau de charge, doivent être régulièrement calibrées. Pour ce faire, des masses de calibrage, dont le poids est précisément déterminé, sont apportées par camion et déposées sur la balance pour en déterminer la précision et au besoin en rectifier la mesure. Un opérateur spécialisé est généralement chargé de calibrer les balances. L'opérateur doit alors apporter les charges de calibrage par camion, décharger les charges de calibrage du camion pour les déposer sur la balance puis, après le calibrage de la balance, recharger les charges de calibrage sur le camion, les sécuriser et transporter les charges de calibrage vers d'autres balances à contrôler. Les temps de chargement et de déchargement des charges de calibrage, et en particulier de leur arrimage, sont alors déterminants dans l'efficacité des opérations de calibrage.

Les dispositifs d'arrimage usuels, notamment au moyen de sangles, ne sont pas adaptés à de telles activités répétitives du fait des temps de manutention qu'ils nécessitent. En outre, plusieurs personnes sont souvent indispensables pour bien arrimer les charges sur le camion. Les risques d'accidents ne sont de plus pas négligeables. Le serrage des sangles par l'un des opérateurs peut notamment conduire à blesser un autre opérateur en train de manipuler les sangles. Il convient par conséquent de développer un dispositif d'arrimage rapide, sûr et efficace, propres à des opérations répétée de chargement et de déchargement.

### Bref résumé de l'invention

Un but de la présente invention est de proposer un dispositif de maintien d'un chargement sur un véhicule de transport, en l'occurrence un camion, qui permette l'arrimage rapide et la libération rapide du chargement. Le chargement est par exemple un chargement standardisé, notamment dans son volume et ses dimensions. Un objectif est plus particulièrement de sécuriser un chargement de masses de calibrage sur un véhicule de transport, les masses de calibrage étant destinées à des chargements et déchargements répétés pour le calibrage de balances de pesée.

Un autre but de l'invention est de proposer un ensemble de calibrage, comprenant un véhicule propre à acheminer des masses de calibrage, un dispositif de maintien de ces masses de calibrage sur le véhicule permettant la libération rapide des masses de calibrage et leur arrimage rapide et sûr, et un outil de chargement permettant le chargement et le déchargement rapides des masses de calibrage. Un objectif de la présente invention est de proposer un ensemble de calibrage pouvant être manipulé par un nombre réduit d'opérateurs, de préférence par un seul opérateur.

Un autre but de la présente invention est de proposer une méthode d'arrimage de charges sur un véhicule tel qu'un camion, de manière rapide et sûre, en particulier pour des charges calibrées en dimensions et en volume.

Selon l'invention, ces buts sont atteints notamment au moyen du dispositif et de la méthode objet des revendications indépendantes et décrits plus en détail dans les revendications qui en dépendent.

Cette solution présente notamment l'avantage par rapport à l'art antérieur de permettre à un nombre réduit d'opérateurs, en l'occurrence un seul opérateur, d'acheminer des charges de calibrage vers un plus grand nombre de balances de pesées.

### Brève description des figures

Des exemples de mise en œuvre de l'invention sont indiqués dans la description illustrée par les figures suivantes :
- Figure 1 : Représentations schématique d'un ensemble de calibrages selon la présente invention, comprenant un véhicule pourvu d'un dispositif de maintien des charges et d'un outil mobile de chargement,
- Figure 2 : représentation schématique latérale d'un détail du dispositif de maintien de charge selon un exemple de la présente invention,
- Figure 3: représentation schématique du dispositif de maintien de charge en vue arrière, selon un exemple de réalisation de la présente invention.
- Figure 4: Représentation schématique d'un élément du dispositif de maintien de charge selon un exemple de réalisation de la présente invention.
- Figure 5 : Représentation schématique d'un élément du dispositif de maintien de charge selon un autre exemple de réalisation de la présente invention.
- Figure 6: Représentation schématique d'un élément du dispositif de maintien de charge selon un autre exemple de réalisation de la présente invention.

### Exemple(s) de mode de réalisation de l'invention

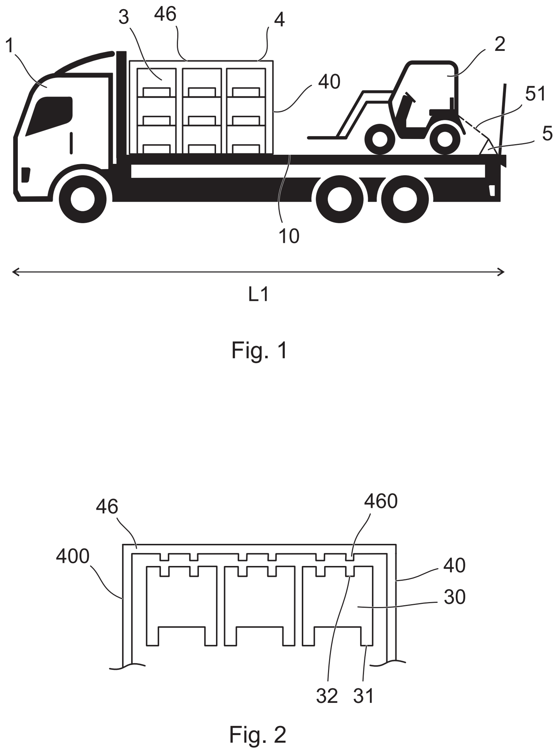

En référence à la figure 1, la présente invention porte sur un ensemble de calibration 1, destiné à contrôler et/ou calibrer des balances de pesées. De telles balances de pesées se présentent généralement sous la forme d'une plateforme sur laquelle peuvent se positionner des véhicules pour en déterminer la masse. De telles balances doivent être régulièrement contrôlées et au besoin recalibrées. Pour ce faire, des masses de calibrage **30,** dont le poids est déterminé, peuvent être disposées sur la balance pour en déterminer la précision de mesure. Ces masses de calibrages **30** sont acheminées via un véhicule dédié 1, déchargées du véhicule 1 pour être disposées sur la balance, puis rechargées sur le véhicule 1. Un opérateur spécialisé est généralement en charge de contrôler un ensemble de balances de pesées sur le territoire. Plusieurs opérations de contrôle sont effectuées chaque jour, ce qui représente outre l'acheminement des masses de calibrage **30,** des opérations répétées de chargement et de déchargement, qui s'accompagnent d'autant d'opérations d'arrimage de ces masses de calibrage **30** sur le véhicule **1.**

Pour des raisons réglementaires, des paramètres tels que le nombre, le poids, la forme des masses de calibrage **30** sont déterminés. Un jeu de masses de calibrage comprend par exemple de 10 à 50 masses **30,** de préférence 15 à 30 masses ou 19 masses de calibrage. Une masse de calibrage peut être calibrée à 500 kg ou à 1 tonne. Des masses calibrées différemment peuvent néanmoins être envisagées selon les besoins. Les masses de calibrage **30** sont disposées sur la plateforme **10** du véhicule **1,** de préférence en position antérieure de la plateforme, soit juste derrière la cabine du véhicule. Elles sont empilées sur plusieurs colonnes. Selon une disposition, 6 colonnes ayant chacune une hauteur de 3 masses de calibrage empilées, sont disposées en position centrale antérieure de la plateforme **10.** La longueur L1 du véhicule **1** est de préférence adaptée pour recevoir l'ensemble des colonnes de masses de calibrage **30** tout en ménageant un espace postérieur sur la plateforme **10** pour disposer un outil de chargement **2.** L'outil de chargement est de préférence un outil mobile, motorisé tel qu'un transpalette. De préférence, l'outil de chargement **2** n'est pas solidaire du véhicule **1,** ce qui pourrait être le cas d'une bras ou d'une grue fixée sur le véhicule. Une telle disposition nécessiterait de placer le véhicule **1** à proximité des balances, ce qui n'est pas toujours possible. L'outil mobile de chargement **2** est par conséquent une solution adaptée et efficace. L'outils de chargement **2** est adapté à déplacer les masses de calibrage **30.** A cet effet, les masses de calibrage **30** comportent un espace en position inférieure pour y loger des lames d'un transpalette. Les masses de calibrage **30** peuvent comporter par exemple des pieds **31.**

Selon un mode de réalisation, l'outil de chargement **2** fait partie de l'ensemble de calibrage. L'ensemble de calibrage forme ainsi un ensemble autonome propre à contrôler plusieurs balances de pesées. Un opérateur spécialisé est en mesure de conduire le véhicule **1,** d'arrimer et désarrimer les masses de calibrage **30,** de les décharger au moyen de l'outil de chargement **2** et de les recharger sur la plateforme **10** du véhicule 1. L'ensemble de calibrage peut comporter en outre un point d'arrimage 5, disposé en position postérieur de la plateforme **10** de sorte à arrimer rapidement l'outil de chargement **2.** Le point d'arrimage **5** permet de fixer un lien d'arrimage 51, de préférence un lien rigide tel qu'une barre d'arrimage, attachée à l'outil de chargement **2.**

Outre le véhicule **1,** les masses de calibrage **30** et l'outil de chargement **2,** l'ensemble de calibrage comporte un dispositif de maintien **4** des masses de calibrage **30** adapté à l'arrimage rapide et sûr des masses de calibrage sur la plateforme **10.** Le dispositif de maintien **4** est de préférence solidaire du véhicule **1.** Il comporte par exemple deux sous-unités disposées à proximité des rebords latéraux de la plateforme **10,** en partie antérieure, de sorte à encadrer les masses de calibrage **30** une fois disposées sur la plateforme **10.** Les sous-unités sont ainsi en vis-à-vis l'une de l'autre, de part et d'autre des masses de calibrage **30.**

Chacune des sous-unités comporte au moins une armature **40a, 40b,** une paire d'armatures étant apte à enserrer les masses de calibrage **30.** Les armatures sont de préférence verticales ou globalement verticales. Elles peuvent être solidarisées à la plateforme **10** via un socle **44.**

Selon un mode de réalisation, une armature selon la présente invention comporte un élément fixe **42,** solidaire de la plateforme **10.** L'élément fixe **42** est de préférence disposé verticalement bien que cette disposition ne soit pas totalement indispensable. L'élément fixe **42** peut prendre la forme d'une poutre verticale ayant une longueur inférieure à la hauteur des colonnes de masses de calibrage **30.** La hauteur de l'élément fixe est par exemple comprise entre 1/3 et 2/3 de la hauteur du dispositif de maintien **4,** ou entre 1/3 et la moitié du dispositif de maintien **4.**

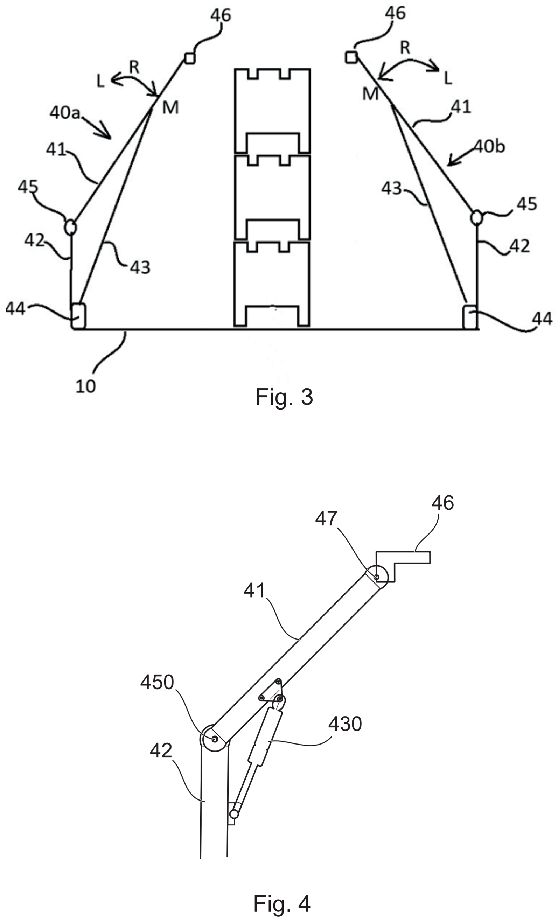

Une armature selon la présente invention comporte en outre un élément mobile **41,** surmontant l'élément fixe **42,** et liés à lui au moyen d'une liaison rotative **45** (figure 3). La liaison rotative **45** permet de mouvoir l'élément mobile **41** entre une position de maintien **M,** permettant de maintenir les masses de calibrage **30** sur le véhicule **1,** et une position de libération **L,** permettant de libérer ces charges de calibrage **30.** En d'autres termes, une rotation de l'élément mobile **41** vers l'extérieur de la plateforme conduit l'élément mobile vers sa position de libération L et une rotation vers le centre de la plateforme **10** le conduit vers sa position de maintien **M.**

Selon un mode de réalisation, la liaison rotative **45** est réalisée au moyen d'un axe de rotation **450** traversant les extrémités des éléments fixe **42** et mobile **41,** ou des embouts dédiés à cet effet.

La liaison rotative peut rester libre, de sorte que l'élément mobile **41** peut être mu manuellement par rapport à l'élément fixe. Alternativement, la liaison rotative **45** peut être assortie d'un mécanisme d'entrainement tel qu'un moteur électrique, continu ou pas à pas (non représenté). Le mouvement de rotation de l'élément mobile **41** peut ainsi être mécanisé. Selon les besoins, des dispositifs de fin de course peuvent être prévus pour limiter le débattement de l'élément mobile **41.**

Les armatures **40a, 40b** comportent chacune un élément de verrouillage **43,** permettant d'immobiliser l'élément mobile **41** dans sa position de maintien **M.** Un élément de verrouillage peut par exemple consister en un moteur électrique au niveau de la liaison rotative **45** et permettant de d'activer ou de bloquer le mouvement de rotation de l'élément mobile **41.**

Alternativement ou en plus, l'élément de verrouillage peut comprendre une barre transversale disposée entre l'élément fixe **42** et l'élément mobile **41,** ou entre le socle **44** et l'élément mobile **41.** L'extrémité de l'élément de verrouillage **43** peut être mécaniquement connectée ou déconnectée de l'élément mobile **41,** et/ou de l'élément fixe ou du socle, par exemple au moyen d'une goupille ou de tout autre dispositif similaire. Ainsi, le verrouillage de l'élément mobile **41** peut être effectué manuellement en solidarisant la barre transversale aux éléments fixe et mobile de l'armature **40.** Une telle disposition évite l'utilisation de sangles pour arrimer les masses de calibrage **30,** dont la manutention est longue.

La longueur de l'élément mobile **41** est adaptée pour venir mettre en contact son extrémité avec les masses de calibration **30** disposées au sommet des colonnes. En l'occurrence, l'extrémité libre des éléments mobiles **41** peut contacter l'arête des masses de calibrage **30.**

Selon un mode de réalisation, la longueur des éléments mobile **41** peut être adaptée à la hauteur des piles de masses de calibration **30** compte tenu de leur débattement autour de la liaison rotative **45.** L'élément mobile peut par exemple comporter une partie télescopique permettant un tel réglage. Ainsi, des colonnes de deux, trois ou quatre ou plus masses de calibrage peuvent être arrimées rapidement et de manière sûre.

Selon un mode de réalisation, les sous-unités du dispositif de maintien **4** comporte chacune un élément de contact **46** permettant de maintenir les masses de calibrage **30.** Par exemple, l'extrémité des éléments mobile **41** peut être pourvue d'un sabot de contact 46. Un tel sabot de contact peut présenter une forme angulaire complémentaire de l'arête des masses des calibrage **30,** de sorte à mieux les arrimer. Selon un mode de réalisation, plusieurs armatures **40** peuvent être disposées de chaque côté de la plateforme **10,** par exemple en vis-à-vis de chacune des colonnes de masses de calibrage **30,** chacune étant pourvue d'un élément de contact individuel. De la sorte, un nombre variable de colonnes de masses de calibrage peuvent être arrimées de manière indépendante.

Alternativement, l'élément de contact **46** selon la présente invention prend la forme d'une barre transversale, mieux visible à la figure **2****,** pouvant être mise en contact avec plusieurs des masses de calibrage **30,** en particulier celles disposées le plus en hauteur. Une telle barre transversale peut être reliée à deux éléments mobiles **41** disposés à distance l'un de l'autre. Leur mouvement de rotation conjoint permet ainsi d'éloigner la barre transversale des masses de calibrage **30** pour les libérer, et de les rapprocher pour les maintenir. Alternativement, l'une des extrémités de la barre transversale, en l'occurrence l'extrémité la plus antérieure, peut être liée à une armature fixe **400.** Une telle armature fixe **400** peut être disposée derrière la cabine pour éviter le basculement des masses de calibrage vers l'avant du véhicule **1.** L'armature fixe est alors solidaire de la plateforme **10** et disposée de manière transversale à la plateforme. L'élément de contact **46** est fixé de manière articulée à l'armature fixe de sorte à pouvoir libérer ou maintenir les masses de calibrage **30** sous l'effet de la rotation de l'élément mobile **41** correspondant.

Selon une disposition particulière, l'élément de contact **46** comporte un relief **460** de blocage, complémentaire de la surface des masses de calibrage **30.** En particulier, les masses de calibrage **30** peuvent être pourvues d'encoches **32** sur leur partie supérieure, facilitant par exemple leur manutention. Dans ce cas, le relief **460** de l'élément de contact **46** s'emboite dans les encoches **32** des masses de calibrage **30** et sécurisent davantage leur maintien.

Selon un mode de réalisation, illustré à la figure 4, l'élément de verrouillage **43** prend la forme d'un actuateur électromécanique ou hydraulique. La rotation R de l'élément mobile **41** au niveau de la liaison rotative **41** peut ainsi être mécanisée. Le verrouillage du dispositif de maintien **40** au contact des masses de calibrage **30** est alors sécurisé au moyen de cet actuateur. L'actuateur peut notamment prendre la forme d'un vérin hydraulique dont l'une des extrémités est solidaire de l'élément fixe **42** ou du socle **44,** et l'autre extrémité est solidaire de l'élément mobile **41.**

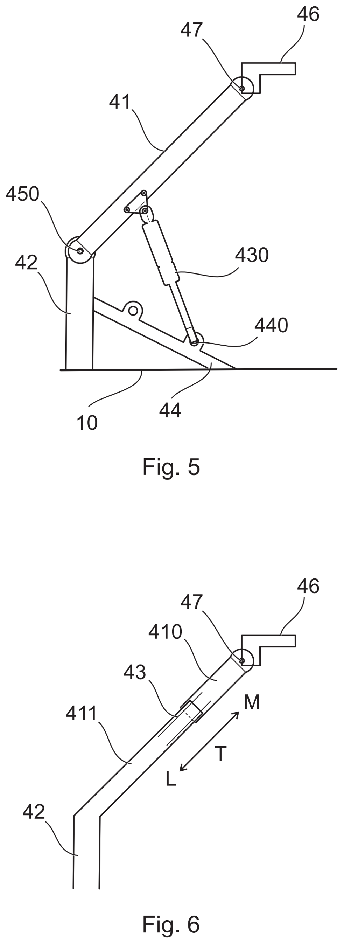

Selon une disposition alternative, le socle **44** est déporté vers le centre de la plateforme **10** (figure 5) et comporte un point d'attache **440** à distance de l'élément fixe **42.** De la sorte le débattement de l'élément mobile **41,** est accru. En particulier, l'élément mobile **41** peut être mu jusqu'à s'aligner verticalement avec l'élément fixe **42,** voire s'incliner vers l'extérieur, au-delà de l'élément fixe **42.**

En fonction des besoins, plusieurs points d'attaches **440** peuvent être prévus sur le socle **44** et/ou sur l'élément mobile **41.** L'actuateur peut ainsi êtres disposé de différentes manières et ajuster par exemple les positions de maintien **M** et de libération **L.**

Un actuateur mécanique ou électromécanique peut être envisagé à la place d'un vérin hydraulique, avec substantiellement les mêmes fonctions.

Selon un mode de réalisation alternatif, illustré à la figure 6, les armatures **40, 40a, 40b,** peuvent comporter un bras de maintien fixe à la place de l'élément mobile. Un tel bras de maintien est liés à l'élément fixe **42** avec un angle déterminé. Il comporte une partie immobile **411,** à l'extrémité de laquelle une partie mobile **410** peut être mue en translation dans l'axe de la partie immobile entre une position de maintien **M** et une position de libération des masses de calibrage **30.** L'élément de verrouillage **43** peut alors être intégré au bras de maintien fixe. Dans le cas où le mouvement de translation peut être opéré manuellement, le verrouillage peut s'effectuer par exemple au moyen d'un axe de verrouillage ou d'une goupille. Alternativement, si le mouvement de translation est mécanisé, via un dispositif électrique ou hydraulique, un tel dispositif peut faire office de moyen de verrouillage. Cette dernière disposition peut être utilisée en addition ou alternativement aux modes de réalisation précédemment décrits. En particulier, la partie mobile **410** peut être intégrée à un élément mobile **41** décrit ci-dessus.

Les armatures **40, 40a, 40b** sont ainsi ajustables entre les positions de maintien **M** et de libération **L.** L'élément mobile **41** fait ainsi office d'élément d'ajustement. La partie mobile disposée à l'extrémité d'un élément immobile **411** ou de l'élément mobile **41,** désigne au autre élément d'ajustement. D'autres éléments d'ajustement peuvent être envisagés, alternativement ou en combinaison.

La présente invention couvre le système de calibrage décrit plus haut comprenant le dispositif de maintient **4.** L'invention couvre en outre spécifiquement le dispositif de maintien tel que décrit ici, indépendamment du système de calibrage. En particulier, le dispositif de maintien **4** peut être monté de manière amovible à la plateforme du véhicule **1.** Les éléments fixes **42** des armatures peuvent par exemple être aisément dissocié de leur socle **44.** En outre, l'armature fixe **400** le cas échéant, peut également se désolidariser de la plateforme **10.** De la sorte, un véhicule peut âtre équipé rapidement avec un dispositif de maintien selon la présente invention. Typiquement, les armatures latérales **40, 40a, 40b** et l'armature fixe **400** peuvent être emboitées dans des ouvertures ménages dans la plateforme.

La présente invention couvre en outre une méthode d'arrimage et de désarrimage de charges sur un véhicule 1, en particulier des masses de calibrage **30** ici-décrites, au moyen du dispositif de maintien 4.

La présente méthode comporte une étape de chargement des masses de calibrage **30** sur la plateforme **10** d'un véhicule 1. De préférence, les masses de calibrage **30** sont disposées à un emplacement dédié, en position centrale antérieure de la plateforme **10.** Le chargement peut être effectué par tout moyen adéquat, y compris par un engin de levage. De préférence, un outil de chargement mobile **2** est utilisé. Une fois les masses de calibrage chargées, la méthode comporte une étape d'arrimage des masses de calibrage. L'arrimage s'effectue au moyen du dispositif de maintien **4.** L'étape d'arrimage comprend le déplacement d'un ou des éléments de contact **46** depuis une position de libération L vers une position de maintien des masses de calibrage **30.** Selon la disposition du dispositif de maintien, le déplacement est effectué par rotation d'un élément mobile **41** ou par translation d'une partie mobile **410** à l'extrémité d'un bras fixe ou par une combinaison des deux. Le mouvement vers la position de maintien peut être effectué manuellement ou être mécanisé, par exemple au moyen d'un vérin hydraulique. Les sous-unités du dispositif de maintien 4, disposées en vis-à-vis l'une de l'autre, sont activées simultanément de sorte à pincer les masses de calibrage.

La méthode d'arrimage comporte une étape de verrouillage du ou des éléments de contact **46** dans la position de maintien **M.** Le verrouillage peut s'effectuer manuellement le cas échéant, par exemple au moyen de goupille ou tout autre dispositif adéquat. Alternativement, le verrouillage est effectuée via le dispositif motorisé utilisé pour mouvoir les éléments de contact **46.**

La méthode comporte une étape de désarrimage permettant de libérer les charges et de les décharger du véhicule 1. L'étape de désarrimage consiste à déverrouiller les éléments de contact **46.** Dans le cas d'un verrouillage manuel, le déverrouillage consiste à ôter manuellement les dispositifs de verrouillage tels que goupilles et autre dispositifs utilisés. Dans le cas d'un verrouillage motorisé, le déverrouillage consiste à activer les actuateurs correspondants. Le désarrimage comporte une étape de libération des charges par mouvement des éléments de contact depuis leur position de maintien **M** vers une position de libération **L,** à distance des masses de calibrage **30.** Selon les dispositions, la libération des charges s'effectue par rotation des éléments mobiles **41** et/ou par translation des parties mobile **410** des bras fixe **411.**

Pour les besoins de la présente description, les termes « antérieur », « postérieur », latéral » doivent se comprendre selon leur sens usuel. En l'occurrence, les éléments antérieurs désignent une partie avant du véhicule ou de l'objet considéré, les éléments postérieurs désignent leur partie arrière. Les masses de calibrage décrites ici représente un type particulier de chargement ou de charge. La présente invention peut aisément être adaptée à des charges autres que les masses de calibrage. Pour les besoins de la présente description, un véhicule désigne tout moyen de transport, incluant les moyen routiers tel que des camions. Un véhicule peut alternativement désigner un wagon de fret ou d'autres types de véhicules.

### Numéros de référence employés sur les figures

- 1: Véhicule de transport
- 10: Plateforme de chargement
- 2: Outil mobile de chargement
- 3: Jeu de charges de calibration
- 30: Charge de calibration
- 31: Pieds de charges de calibration
- 32: Encoches de charges
- 4: Dispositif de maintien de charges
- 40, 40a, 40b: Armatures
- 41: Elément mobile
- 410: Partie mobile
- 411: Partie immobile
- 42: Elément fixe
- 43: Elément de verrouillage
- 430: Vérin
- 44: Socle
- 440: Point d'attache
- 45: Liaison articulée
- 450: Axe de rotation
- 46: Elément de contact
- 460: Relief de maintien
- 5: point d'arrimage
- 51: Lien d'arrimage
- R: Rotation
- T: Translation
- M: Position de maintien
- L: Position de libération

## Revendications

1. Ensemble de calibrage comprenant un véhicule (1) pourvu d'une plateforme de chargement (10), un jeu de poids de calibrages (3) comprenant plusieurs poids de calibrages (30) et un dispositif de maintien (4) des poids de calibrage, le dispositif de maintien comprenant au moins deux armatures (40, 40a, 40b) disposées en vis-à-vis, ajustables entre une position de maintien (M) des poids sur la plateforme (10) et une position de libération (L) des poids.

2. Ensemble de calibrage selon la revendication 1, chacune des armatures comprenant au moins un élément de contact (46) et un élément d'ajustement adapté à déplacer ledit au moins un élément de contact (46) entre lesdites positions de maintien (M) et de libération (L).

3. Ensemble de calibrage selon l'une des revendication 1 et 2, lesdites armatures étant combinées à ladite plateforme (10) via un socle (44).

4. Ensemble selon l'une des revendications 1 à 3, lesdites armatures un élément mobile en rotation (41) et/ou une partie mobile en translation (410).

5. Ensemble selon l'une des revendications 1 à 4, ledit dispositif de maintien comprenant en outre un élément de verrouillage (43) permettant de verrouiller lesdits éléments de contact (46) dans leur position de maintien.

6. Ensemble de calibrage selon l'une des revendications 1 à 4, comprenant en outre un outil mobile de chargement (2) adapté aux poids de calibrage, l'outil mobile de chargement (2) étant disposé sur la plateforme (10) et arrimé à la plateforme (10) par un lien d'arrimage (51) reliant l'outil de chargement à un point d'arrimage disposé en position postérieure de la plateforme (10).

7. Dispositif de maintien (4) adapté au maintien de charges, comprenant au moins deux armatures (40, 40a, 40b) disposées en vis-à-vis, chacune des armatures comprenant un élément fixe (42), un élément de contact (46), un élément d'ajustement reliant ledit élément fixe à l'élément de contact (46), l'élément d'ajustement étant mobile entre une position de maintien (M) et une position de libération (L), et un élément de verrouillage (43).

8. Dispositif de maintien selon la revendication 7, l'élément d'ajustement étant un élément mobile en rotation (41), connecté à l'élément fixe (42) au moyen d'une liaison rotative (45), l'élément de verrouillage (43) désignant un actuateur électromécanique ou pneumatique (430) disposé entre l'élément fixe (42) et l'élément mobile (41), et/ou ledit élément d'ajustement désignant une partie mobile en translation (410) disposée à l'extrémité d'un bras (411), ledit élément de verrouillage étant intégré au bras (411).

9. Dispositif selon l'une des revendications 7 et 8, ledit élément de contact comprenant un relief de blocage (460), adapté à compléter le relief des charges maintenues.

10. Méthode d'arrimage de charge sur un véhicule (1) pourvu d'un dispositif de maintien selon l'une des revendications 7 à 9, la méthode comprenant:
- Une étape de placer la charge sur le véhicule,
- Une étape d'arrimer la charge par ajustement du dispositif de maintien dans une position de maintien (M), et
- Une étape de verrouillage du dispositif de maintien dans ladite position de maintien.
